# EUROPÄISCHE PATENTSCHRIFT

(11) **EP 4 643 188 B1**
(45) Veröffentlichungstag und Bekanntmachung des Hinweises auf die Patenterteilung: **18.11.2026**
(21) Anmeldenummer: 24704343.3
(22) Anmeldetag: 05.02.2024
(51) Int. Cl.: G05B 9/03, G05B 19/042

(54) **VERFAHREN ZUM BETREIBEN EINES REDUNDANTEN AUTOMATISIERUNGSSYSTEMS UND REDUNDANTES AUTOMATISIERUNGSSYSTEM**
METHOD FOR OPERATING A REDUNDANT AUTOMATION SYSTEM AND REDUNDANT AUTOMATION SYSTEM
PROCÉDÉ DE FONCTIONNEMENT D'UN SYSTÈME D'AUTOMATISATION REDONDANT ET SYSTÈME D'AUTOMATISATION REDONDANT

(30) Priorität: 08.03.2023 EP 23160779
(43) Veröffentlichungstag der Anmeldung: 05.11.2025
(73) Patentinhaber: Siemens Aktiengesellschaft, 80333 München (DE)
(72) Erfinder: LAFORSCH, Jürgen, 77815 Bühl (DE)
(74) Vertreter: Siemens Patent Attorneys
(86) Internationale Anmeldenummer: PCT/EP2024/052681
(87) Internationale Veröffentlichungsnummer: WO 2024/183992

(56) Entgegenhaltungen:
- EP-A1- 3 872 582
- EP-A1- 3 872 583

## Beschreibung

Die Erfindung betrifft ein redundantes Automatisierungssystem, welches zumindest eine erste Hardwareeinheit und eine zweite Hardwareeinheit umfasst, wobei die erste Hardwareeinheit eine erste Prozessoreinheit und eine zweite Prozessoreinheit, und die zweite Hardwareeinheit eine dritte Prozessoreinheit und eine vierte Prozessoreinheit umfassen, wobei die erste Hardwareeinheit dazu ausgebildet ist, mittels der ersten Prozessoreinheit eine erste Gruppe von Aufgaben und mittels der zweiten Prozessoreinheit eine zweite Gruppe von Aufgaben auszuführen und entsprechende Ausgangssignale an einen durch das redundante Automatisierungssystem gesteuerten industriellen Prozess auszugeben, wobei die zweite Hardwareeinheit dazu ausgebildet ist, mittels der dritten Prozessoreinheit eine dritte Gruppe von Aufgaben und mittels der vierten Prozessoreinheit eine vierte Gruppe von Aufgaben auszuführen und entsprechende Ausgangssignale an einen durch das redundante Automatisierungssystem gesteuerten industriellen Prozess auszugeben bzw. die entsprechenden Sensorsignale aus dem industriellen Prozess zu empfangen, wobei das redundante Automatisierungssystem dazu ausgebildet ist, bei einem Ausfall der ersten Hardwareeinheit die Aufgaben der dritten Gruppe und der vierten Gruppe durchzuführen und die entsprechenden Ausgangssignale an einen durch das redundante Automatisierungssystem gesteuerten industriellen Prozess auszugeben bzw. die entsprechenden Sensorsignale aus dem industriellen Prozess zu empfangen, und wobei das redundante Automatisierungssystem dazu ausgebildet ist, bei einem Ausfall der zweiten Hardwareeinheit die Aufgaben der ersten und der zweiten Gruppe durchzuführen und die entsprechenden Ausgangssignale an den gesteuerten industriellen Prozess auszugeben, wobei das redundante Automatisierungssystem eine erste Synchronisationsverbindung umfasst, über die die Aufgaben der ersten Gruppe und der dritten Gruppe miteinander abgleichbar sind, und eine zweite Synchronisationsverbindung umfasst, über die die Aufgaben der zweiten Gruppe und der vierten Gruppe miteinander abgleichbar sind.

Darüber hinaus betrifft die Erfindung ein System, welches ein System zum Bedienen und Beobachten des industriellen Prozesses und ein redundantes Automatisierungssystem umfasst. Zudem betrifft die Erfindung ein Verfahren zum Betreiben eines redundant ausgelegten Automatisierungssystems.

Im Automatisierungsumfeld werden verstärkt hochverfügbare Lösungen (H-Systeme) gefordert, welche geeignet sind, eventuell auftretende Stillstandszeiten der Anlage auf ein Minimum zu reduzieren. Die Entwicklung derartiger hochverfügbarer Lösungen ist sehr kostenintensiv, wobei ein im Automatisierungsumfeld gewöhnlich eingesetztes H-System sich dadurch auszeichnet, dass zwei oder mehrere Teilsysteme in Form von Automatisierungsgeräten oder Rechnersystemen über eine Synchronisationsverbindung miteinander gekoppelt sind. Auf die an dieses H-System angeschlossenen Peripherieeinheiten können prinzipiell beide Teilsysteme lesend und/oder schreibend zugreifen. Eines der beiden Teilsysteme ist bezüglich der an das System angeschlossenen Peripherie führend. Die Anbindung der Peripherie erfolgt gemäß genormter Kommunikationsprotokolle für redundante Feldbusse.

Aus dem Siemens-Katalog ST 70, Kapitel 6, Ausgabe 2011 ist ein redundantes, aus zwei Teilsystemen bestehendes Automatisierungssystem bekannt, welches dazu vorgesehen ist, die Verfügbarkeit einer zu steuernden Anlage zu erhöhen. Dieses Automatisierungssystem wird regelmäßig synchronisiert und es ist sichergestellt, dass der Ausfall eines dieser Teilsysteme sich nicht störend auf einen zu steuernden Prozess auswirkt, weil das andere Teilsystem die Ausführung bzw. die Bearbeitung des entsprechenden Teils ihres jeweiligen Steuerprogramms oder die Ausführung bzw. die Bearbeitung der entsprechenden Teile dieses Steuerprogramms fortsetzen kann.

Aus der EP 0 907 912 B1 ist ein Synchronisationsverfahren für ein aus zwei Teilsystemen aufgebautes Automatisierungssystem bekannt. Dieses Synchronisationsverfahren basiert auf einer zeitlich synchronen Kopplung der beiden Teilsysteme, wobei an geeigneten Programmstellen, an denen ein Abgleich vorgesehen ist, beide Teilsysteme auf eine Antwort des jeweils anderen Teilnehmers warten und erst dann jeweils ihre Programmverarbeitung zeitlich synchron fortsetzen.

In der EP 2 657 797 A1 ist ein Verfahren zum Betreiben eines redundanten Automatisierungssystem offenbart, das ein besonders vorteilhaftes Synchronisationsverfahren beinhaltet. Auch die EP 2 667 269 A1 offenbart ein Betriebsverfahren für ein redundantes Automatisierungssystem.

EP3872583 A1 beschreibt ein redundantes Automatisierungssystem mit mindestens drei Teilsystemen. Jedes enthält Teilprogramme und zugehörige Teilspeicher, die über unterschiedliche Synchronisationstakte zwischen den Teilsystemen abgeglichen werden.

EP 3872582 A1 offenbart ein redundantes Automatisierungssystem mit zwei Teilsystemen (Master/Slave). Jedes enthält mehrere Teilprogramme und zugehörige Teilspeicher, die über unterschiedliche Synchronisationstakte synchronisiert werden.

Bei redundanten Automatisierungssystemen stellt sich grundsätzlich das Problem, eingehende sowie ausgehende Datenströme synchronisiert zu verarbeiten. Dies bedeutet im Wesentlichen, dass eingehende Datenströme auf beide redundanten Teilsysteme verdoppelt und ausgehende Datenströme, die in beiden redundanten Teilsystemen entstehen, vereinzelt werden müssen. Dies ist bei bislang bekannten Redundanzlösungen mit einer entsprechend hohen Rechenzeitbelastung auf den beiden Teilsystemen verbunden.

In Automatisierungssystemen sind in vielen Fällen hochverfügbare Lösungen (sogenannte H-Systeme) gefordert. H-Systeme zeichnen sich dadurch aus, dass ein und dieselbe Automatisierungsaufgabe redundant auf mehreren verschiedenen Hardwareeinheiten ausgeführt wird, jedoch nur die Ausgangssignale einer der Hardwareeinheiten tatsächlich zur Steuerung des industriellen Prozesses verwendet werden. Dadurch ist es möglich, dass bei Ausfall der zur Steuerung des industriellen Prozesses verwendeten Hardwareeinheit die andere Hardwareeinheit verzögerungsfrei oder zumindest nahezu verzögerungsfrei die Steuerung des Prozesses übernimmt.

Um auch tatsächlich die Steuerung des industriellen Prozesses verzögerungsfrei oder zumindest nahezu verzögerungsfrei übernehmen zu können, ist zum einen eine Synchronisierung der Hardwareeinheiten, welche jeweils die Automatisierungsaufgabe abarbeiten, erforderlich. Hierbei muss gewährleistet sein, dass die Hardwareeinheiten mit den gleichen Daten arbeiten und die gleichen Daten auf die gleiche Art und Weise verarbeiten.

Aus Sicht einer Operator Station wird bei bekannten redundanten Automatisierungssystemen eine hochverfügbare Verbindung zu einem Kommunikationspartner wie einer Operator Station verwendet. Fällt eine Transport-Verbindung aus, so kann unmittelbar auf die andere umgeschaltet werden, da die Datenhaltung in beiden Baugruppen des Automatisierungssystems durch die Synchronisation abgeglichen ist. Somit kann z.B. der Auftrag über die eine Teilverbindung empfangen, aber die Quittung über die andere Teilverbindung der hochverfügbaren Verbindung zurückgesendet werden. Der hierfür erforderliche Abgleich der hochsynchronen Datenhaltung stellt jedoch eine Durchsatz-Bremse dar, die typisch bei einem Faktor 3 liegt.

Der Erfindung liegt daher die Aufgabe zugrunde, ein Verfahren zum Betreiben eines redundant ausgelegten Automatisierungssystems und ein entsprechendes redundantes Automatisierungssystem anzugeben, welche einen durch das Automatisierungssystem bedingten Ressourcenaufwand verringern.

Diese Aufgabe wird durch ein redundantes Automatisierungssystem gemäß Anspruch 1 gelöst. Das Automatisierungssystem umfasst zumindest eine erste Hardwareeinheit und eine zweite Hardwareeinheit, wobei die erste Hardwareeinheit eine erste Prozessoreinheit und eine zweite Prozessoreinheit, und die zweite Hardwareeinheit eine dritte Prozessoreinheit und eine vierte Prozessoreinheit umfassen,
wobei die erste Hardwareeinheit dazu ausgebildet ist, mittels der ersten Prozessoreinheit eine erste Gruppe von Aufgaben und mittels der zweiten Prozessoreinheit eine zweite Gruppe von Aufgaben auszuführen und entsprechende Ausgangssignale an einen durch das redundante Automatisierungssystem gesteuerten industriellen Prozess auszugeben bzw. die entsprechenden Sensorsignale aus dem industriellen Prozess zu empfangen,
wobei die zweite Hardwareeinheit dazu ausgebildet ist, mittels der dritten Prozessoreinheit eine dritte Gruppe von Aufgaben und mittels der vierten Prozessoreinheit eine vierte Gruppe von Aufgaben auszuführen und entsprechende Ausgangssignale an einen durch das redundante Automatisierungssystem gesteuerten industriellen Prozess auszugeben bzw. die entsprechenden Sensorsignale aus dem industriellen Prozess zu empfangen,
wobei das redundante Automatisierungssystem dazu ausgebildet ist, bei einem Ausfall der ersten Hardwareeinheit die Aufgaben der dritten Gruppe und der vierten Gruppe durchzuführen und die entsprechenden Ausgangssignale an einen durch das redundante Automatisierungssystem gesteuerten industriellen Prozess auszugeben bzw. die entsprechenden Sensorsignale aus dem industriellen Prozess zu empfangen,
und wobei das redundante Automatisierungssystem dazu ausgebildet ist, bei einem Ausfall der zweiten Hardwareeinheit die Aufgaben der ersten und der zweiten Gruppe durchzuführen und die entsprechenden Ausgangssignale an den gesteuerten industriellen Prozess auszugeben bzw. die entsprechenden Sensorsignale aus dem industriellen Prozess zu empfangen,
wobei das redundante Automatisierungssystem eine erste Synchronisationsverbindung umfasst, über die die Aufgaben der ersten Gruppe und der dritten Gruppe miteinander abgleichbar sind, und eine zweite Synchronisationsverbindung umfasst, über die die Aufgaben der zweiten Gruppe und der vierten Gruppe miteinander abgleichbar sind.

Es ist möglich, dass das Automatisierungssystem weitere Hardwareeinheiten mit jeweils zwei Prozessoreinheiten aufweist, wobei die Synchronisationsverbindungen wie zuvor erläutert auf analoge Art und Weise ausgebildet sind.

Die Aufteilung der jeweiligen Hardwareeinheit kann hardwaremäßig, aber auch softwaremäßig in zwei Prozessoreinheiten erfolgen. Die Aufteilung stellt somit allgemein gesehen eine "logische" Aufteilung dar.

Das erfindungsgemäße Automatisierungssystem ist in an sich bekannter Weise dazu ausgebildet, einen redundanten Betrieb zu ermöglichen, wobei die beiden Hardwareeinheiten jeweils die Aufgaben der anderen Hardwareeinheit übernehmen können, falls diese zeitweise oder nicht mehr funktionsfähig sein sollte. Für einen Abgleich der beiden Hardwareeinheiten sind diese über eine erste und eine zweite Synchronisationsverbindung verbunden. Durch die redundante Auslegung der Komponenten des Automatisierungssystems soll ein durchgängiger Betrieb des Automatisierungssystems, auch im Fehlerfall, gewährleistet werden.

Das Automatisierungssystem ist erfindungsgemäß dadurch gekennzeichnet, dass die erste Synchronisationsverbindung für einen zeitversetzten Abgleich der Aufgaben der ersten Gruppe und der dritten Gruppe ausgebildet ist, und die zweite Synchronisationsverbindung für einen hochsynchronen Abgleich der Aufgaben der zweiten Gruppe und der vierten Gruppe ausgebildet ist.

Die erste Prozessoreinheit und dritte Prozessoreinheit sind bevorzugt für Aufgaben der Kommunikation mit externen Systemen wie einer Operator Station vorgesehen. Die erste Gruppe von Aufgaben und die dritte Gruppe von Aufgaben sind demnach bevorzugt Kommunikationsaufgaben, die keine Ausgangssignale an den gesteuerten industriellen Prozess als Ergebnis aufweisen.

Die zweite Prozessoreinheit und die vierte Prozessoreinheit sind bevorzugt dazu vorgesehen, Aufgaben zur Steuerung des industriellen Prozesses auszuführen und entsprechende Ausgangssignale an den durch das redundante Automatisierungssystem gesteuerten industriellen Prozess auszugeben.

Durch den zeitversetzten Abgleich der Aufgaben der ersten und der dritten Gruppe zwischen den ersten und dritten (Kommunikations-) Prozessoreinheiten kann die dadurch entstehende Kommunikationslast gegenüber dem Stand der Technik deutlich verringert werden. Die zweite und vierte (Steuerungs-)Prozessoreinheit werden zur Realisierung der notwendigen Redundanzfunktionalität hingegen hochsynchron abgeglichen.

Dabei bedeutet der Begriff "hochsynchron", dass ein Bearbeitungszustand der zweiten und vierten (Steuerungs-)Prozessoreinheit zu jedem Zeitpunkt mit einer verhältnismäßig geringen Latenz identisch ist. Der hochsynchrone Abgleich der Aufgaben der zweiten Gruppe und der vierten Gruppe über die zweite Synchronisationsverbindung weist erfindungsgemäß eine zeitliche Verzögerung von weniger als 1 Millisekunde auf. Dies bedeutet, dass die beiden Prozessoreinheiten mit einer Verzögerung / Latenz von weniger als 1 Millisekunde die identischen Aufgaben abarbeiten. Der hochsynchrone Abgleich der zweiten Synchronisationsverbindung wird dabei vorteilhafterweise durch das Anfallen einer neuen Aufgabe der zweiten oder der vierten Gruppe initiiert. Man spricht in diesem Zusammenhang von einer ereignissynchronen Kopplung der beiden zweiten und vierten (Steuerungs-)Prozessoreinheiten.

Die beiden ersten und dritten (Kommunikations-)Prozessoreinheiten weisen im Rahmen des zeitversetzten Abgleichs der Aufgaben eine zeitliche Verzögerung von mehr als 10 Millisekunden auf. Der Abgleich der ersten und dritten (Kommunikationsprozessoreinheiten) ist nicht ereignissynchron ausgebildet. Vielmehr kann mit dem Abgleich so lange gewartet werden, bis auf der Synchronisationsverbindung auch Kapazität für den Abgleich besteht.

Mit anderen Worten wird der Abgleich zwischen den ersten und dritten (Kommunikations-)Prozessoreinheiten im Rahmen der Erfindung um Größenordnungen, bevorzugt wenigstens eine Größenordnung, seltener durchgeführt als der Abgleich / die Synchronisation zwischen den zweiten und vierten (Steuerungs-)Prozessoreinheiten. Dadurch lässt sich der notwendige Kommunikationsaufwand des Automatisierungssystems deutlich reduzieren, ohne dass hiermit jedoch ein Qualitätsverlust in der Redundanzfunktionalität verbunden wäre. Ein weiterer Vorteil der Modellierung ist, dass die Wahrscheinlichkeit sinkt, dass beide ersten und dritten (Kommunikations-)Prozessoreinheiten gleichzeitig (quasi synchronisiert) in den Betriebszustand DEFEKT wechseln; die Verfügbarkeit der ersten und dritten (Kommunikations-)Prozessoreinheiten steigt.

Bei einer vorteilhaften Weiterbildung der Erfindung nutzen die erste Synchronisationsverbindung und die zweite Synchronisationsverbindung ein gemeinsames Synchronisationsmedium, insbesondere einen Lichtwellenleiter. Ein solcher Lichtwellenleiter ist für die Realisierung eines hochsynchronen Abgleichs gebräuchlich und kann auf besonders vorteilhafte Art und Weise auch für den nicht hochsynchronen (zeitversetzten) Abgleich der ersten und dritten (Kommunikations-)Prozessoreinheiten verwendet werden. Dadurch ist ein zusätzliches Synchronisationsmedium nicht nötig.

Die zuvor formulierte Aufgabe wird zudem gelöst durch ein System, welches ein System zum Bedienen und Beobachten des industriellen Prozesses und ein redundantes Automatisierungssystem nach einem der vorangegangenen Ansprüche umfasst, wobei das System zum Bedienen und Beobachten des industriellen Prozesses über einen Anlagenbus, der insbesondere als Industrial Ethernet ausgebildet ist, mit der ersten Prozessoreinheit der ersten Hardwareeinheit verbunden ist, und wobei das System zum Bedienen und Beobachten des industriellen Prozesses über den Anlagenbus mit der dritten Prozessoreinheit der zweiten Hardwareeinheit verbunden ist, und wobei die zweite Prozessoreinheit der ersten Hardwareeinheit und die vierte Prozessoreinheit der zweiten Hardwareeinheit mit dem industriellen Prozess verbindbar sind.

Bevorzugt werden für die Verbindung zwischen dem System zum Bedienen und Beobachten (Operator Station) nur standardisierte Verbindungsverfahren verwendet. Diese standardisierten Verbindungsverfahren zeichnen sich dadurch aus, dass sie nicht hochverfügbar ausgelegt sein müssen. Hierfür muss das System zum Bedienen und Beobachten zwei Standard-Verbindungen jeweils zu der ersten und dritten (Kommunikations-)Prozessoreinheit aufbauen, um bei einem Ausfall ggf. auf die andere Standard-Verbindung wechseln zu können. Die Kommunikationsaufträge müssen dabei ggf. wiederholt werden. Besonders bevorzugt ist das System zum Bedienen und Beobachten des industriellen Prozesses mit der ersten Prozessoreinheit und der dritten Prozessoreinheit des redundanten Automatisierungssystems mittels einer auf TCP/IP oder TLS basierenden Kommunikationsverbindung kommunikativ verbunden.

Die Aufgabe wird zudem gelöst durch ein Verfahren zum Betreiben eines redundant ausgelegten Automatisierungssystems, das zumindest eine erste Hardwareeinheit und eine zweite Hardwareeinheit umfasst, wobei die erste Hardwareeinheit eine erste Prozessoreinheit und eine zweite Prozessoreinheit, und die zweite Hardwareeinheit eine dritte Prozessoreinheit und eine vierte Prozessoreinheit umfassen, wobei die erste Hardwareeinheit dazu ausgebildet ist, mittels der ersten Prozessoreinheit eine erste Gruppe von Aufgaben und mittels der zweiten Prozessoreinheit eine zweite Gruppe von Aufgaben auszuführen, wobei die zweite Hardwareeinheit dazu ausgebildet ist, mittels der dritten Prozessoreinheit eine dritte Gruppe von Aufgaben und mittels der vierten Prozessoreinheit eine vierte Gruppe von Aufgaben auszuführen, wobei das redundante Automatisierungssystem dazu ausgebildet ist, bei einem Ausfall der ersten Hardwareeinheit die Aufgaben der dritten Gruppe und der vierten Gruppe durchzuführen und entsprechende Ausgangssignale an einen durch das redundante Automatisierungssystem gesteuerten industriellen Prozess auszugeben, und wobei das redundante Automatisierungssystem dazu ausgebildet ist, bei einem Ausfall der zweiten Hardwareeinheit die Aufgaben der ersten und der zweiten Gruppe durchzuführen und entsprechende Ausgangssignale an den gesteuerten industriellen Prozess auszugeben, wobei das redundante Automatisierungssystem eine erste Synchronisationsverbindung umfasst, über die die Aufgaben der ersten Gruppe und der dritten Gruppe miteinander abgleichbar sind, und eine zweite Synchronisationsverbindung umfasst, über die die Aufgaben der zweiten Gruppe und der vierten Gruppe miteinander abgleichbar sind.

Das Verfahren ist dadurch gekennzeichnet, dass über die erste Synchronisationsverbindung ein zeitversetzter Abgleich der Aufgaben der ersten Gruppe und der dritten Gruppe erfolgt, und über die zweite Synchronisationsverbindung ein hochsynchroner Abgleich der Aufgaben der zweiten Gruppe und der vierten Gruppe erfolgt.

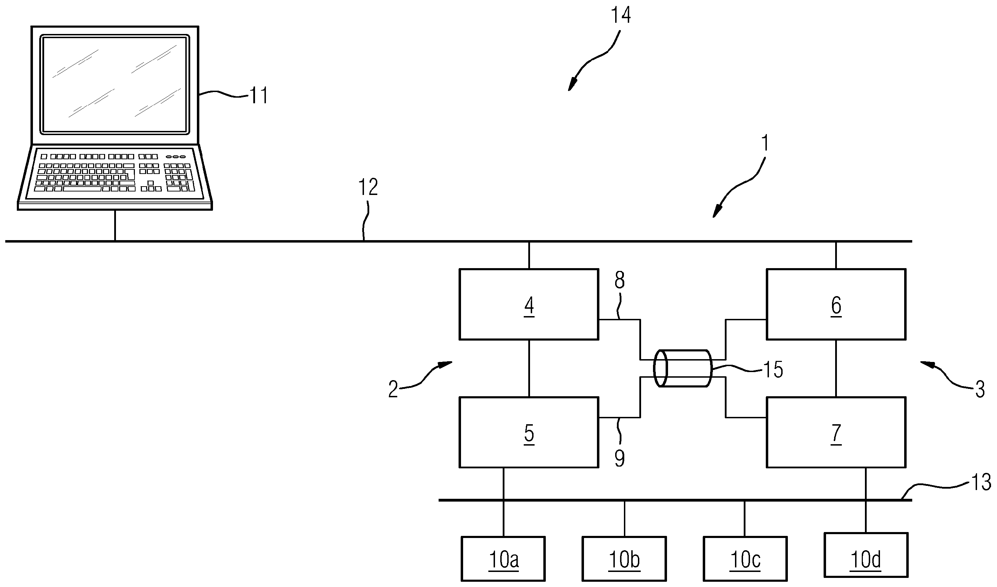

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

In der Figur ist ein System 14 mit einem Operator Station Server 11 als System zum Bedienen und Beobachten eines industriellen Prozesses 10a, 10b, 10c, 10d und einem redundanten Automatisierungssystem 1 dargestellt. Das Automatisierungssystem 1 weist eine erste Hardwareeinheit 2 und eine zweite Hardwareeinheit 3 auf. Die erste Hardwareeinheit 2 umfasst eine erste Prozessoreinheit 4 und eine zweite Prozessoreinheit 5. Die zweite Hardwareeinheit 3 umfasst eine dritte Prozessoreinheit 6 und eine vierte Prozessoreinheit 7.

Die erste Prozessoreinheit 4 der ersten Hardwareeinheit 4 ist über einen Anlagenbus 12 (Industrial Ethernet) mit dem Operator Station Server 11 verbunden. Gleichfalls ist die dritte Prozessoreinheit 6 über den Anlagenbus 12 mit dem Operator Station Server 11 verbunden. Die zweite Prozessoreinheit 5 und die vierte Prozessoreinheit 7 sind jeweils dem industriellen Prozess 10a, 10b, 10c, 10d über einen Feldbus 13 verbunden. Zudem sind die erste Prozessoreinheit 4 und die zweite Prozessoreinheit 5, und die dritte Prozessoreinheit 6 und die vierte Prozessoreinheit 7 miteinander verbunden.

Die erste Prozessoreinheit 4 ist mit der dritten Prozessoreinheit über eine erste Synchronisationsverbindung 8 verbunden. Die zweite Prozessoreinheit 5 ist mit der vierten Prozessoreinheit 7 über eine zweite Synchronisationsverbindung 9 verbunden. Die beiden Synchronisationsverbindungen 8, 9 nutzen gemeinsam einen Lichtwellenleiter 15 als Verbindungsmedium.

Die erste und dritte Prozessoreinheit 4, 6 agieren als Kommunikationsprozessoren, die eine Kommunikation des Automatisierungssystems 1 mit dem System zum Bedienen und Beobachten 11 realisieren. Die zweite und vierte Prozessoreinheit 5, 7 agieren als Steuerungsprozessoren, die den industriellen Prozess 10a, 10b, 10c, 10d in an sich bekannter Art und Weise steuern.

Nachfolgend werden einzelne Betriebszustände der Prozessoreinheiten 4, 5, 6, 7 anhand einzelner Betriebsphasen des Automatisierungssystems 1 erläutert:
Nach einem Einschalten des Automatisierungssystems 1 laufen zunächst Betriebssysteme der ersten und dritten (Kommunikations-)Prozessoreinheiten 4, 6, sowie der zweiten und vierten (Steuerungs-)Prozessoreinheiten 5, 7 an. Die Steuerungsprozessoreinheiten 5, 7 befinden sich zunächst im Betriebszustand STOP.

Die beiden Kommunikationsprozessoreinheiten 4, 6 führen automatisch über die nicht hochsynchrone (zeitversetzte) Kopplung der ersten Synchronisationsverbindung 8 einen Datenabgleich durch, sobald die Kopplung verfügbar ist. Es muss dabei nicht darauf gewartet werden, bis die erste Hardwareeinheit 2 und die zweite Hardwareeinheit 3 sich in einem synchronisierten Zustand befinden, was bei bekannten redundanten Automatisierungssystemen bislang notwendig war.

Der Datenabgleich bezieht sich auf projektierte Daten (falls schon geladen) und auf dynamischen Daten, z.B. der Systemdiagnose. Dieser Datenabgleich findet ständig statt, z.B. wenn eine Projektierung auf einen der Kommunikationsprozessoreinheiten 4, 6 geladen wird.

Parallel zu diesem Datenabgleich von Automatenzuständen werden neue Ereignisse, die jeweils einseitig auf den Kommunikationsprozessoreinheiten 4, 6 auftreten, über die nicht hochsynchrone (zeitversetzte) Kopplung 8 ausgetauscht.

Das System zum Bedienen und Beobachten 11 startet daraufhin z.B. mittels Kommunikationsdiensten unter Nutzung einer standardisierten Verbindung (beispielsweise mittels TCP/IP) über die erste Kommunikationsprozessoreinheit 4 das zuvor geladene Anwenderprogramm in der ersten Steuerungsprozessoreinheit 5. Hierzu werden Kommunikationsaufträge in der ersten Kommunikationsprozessoreinheit 4 ausgeführt bzw. über ein "Application Programming Interface" (API) zu der zweiten Steuerungsprozessoreinheit 5 für den lesenden oder schreibenden Datenzugriff weitergeleitet. Das Ergebnis wird über das API der ersten Kommunikationsprozessoreinheit 4 zurückgegeben und dort eine Kommunikationsquittung aufgebaut. Die Quittung wird dann über den Anlagenbus 12 an das System zum Bedienen und Beobachten (Operator Station) 11 zurückgegeben.

Anschließend befindet sich das Automatisierungssystem 1 bzw. die Steuerungsprozessoreinheit 5 im Betriebszustand RUN_SOLO. Die Steuerungsprozessoreinheit 7 befindet sich dabei im Betriebszustand STOP.

Eine weitere standardisierte Verbindung mit der Kennung "M&C" endet bei der dritten Kommunikationsprozessoreinheit 6. Alle Kommunikationsaufträge, die die Kennung "M&C" enthalten, werden zu der ersten Kommunikationsprozessoreinheit 4 weitergeleitet, da sich die vierte Steuerungsprozessoreinheit 7 im Betriebszustand STOP befindet.

Für den Fall, dass ein Ereignis auf der zweiten Steuerungsprozessoreinheit 5, die sich im Betriebszustand RUN_SOLO befindet, auftritt (z.B., weil ein Grenzwert überschritten wurde), wird dieses Ereignis über das API der ersten Kommunikationsprozessoreinheit 4 zur Verfügung gestellt.

Die erste Kommunikationsprozessoreinheit 4 leitet das Ereignis über die nicht hochsynchrone (zeitversetzte) Kopplung 8 an die dritte Kommunikationsprozessoreinheit 6 weiter. Anschließend wird in beiden Kommunikationsprozessoreinheiten 4, 6 das Ereignis jeweils lokal weiterverarbeitet und ggf. das System zum Bedienen und Beobachten (Operator Station) über die Standard-Verbindungen der Kommunikationsprozessoreinheiten 4, 6 informiert.

Es wird nun angenommen, dass beide Kommunikationsprozessoreinheiten 4, 6 den initialen Datenabgleich abgeschlossen haben. Die zweite Steuerungsprozessoreinheit 5 befindet sich im Betriebszustand RUN_SOLO und die vierte Steuerungsprozessoreinheit 7 zunächst noch im Betriebszustand STOP.

Das System zum Bedienen und Beobachten (Operator Station) 11 löst per Kommunikation ein Synchronisationsverfahren über die erste Kommunikationsprozessoreinheit 4 für die Steuerungsprozessoreinheiten 5, 7 aus:
- Alle Standard-Verbindungen zu der dritten Kommunikationsprozessoreinheit 6 werden abgebrochen. Dadurch werden alle Zustandsautomaten, die über diese Standard-Verbindungen belegt wurden, freigegeben.
- Die Daten der zweiten Steuerungsprozessoreinheit 5 werden schrittweise auf die vierte Steuerungsprozessoreinheit 7 übertragen. Dies betrifft Verwaltungsdaten und Daten aus dem Anwenderprogramm, z.B. Inhalte von Datenbausteinen. Ist die Übertragung abgeschlossen, wechseln beide Steuerungsprozessoreinheiten 5, 7 in den Betriebszustand RUN_REDUNDANT.

Ab diesem Zeitpunkt können die Standard-Verbindungen zur dritten Kommunikationsprozessoreinheit 6 wieder aufgebaut und genutzt werden.

Im Folgenden wird angenommen, dass das System zum Bedienen und Beobachten (Operator Station) 11 einen Lesen- oder Schreiben-Auftrag an die erste Kommunikationsprozessoreinheit 4 schickt. Dieser stellt die Daten seiner zugeordneten zweiten Steuerungsprozessoreinheit 5 zur Verfügung. Diese zweite Steuerungsprozessoreinheit 5 sorgt für den Abgleich z.B. eines Auftrags zum Schreiben von Variablen mit der vierten Steuerungsprozessoreinheit 7. Hierfür wird die hochsynchrone Synchronisationsverbindung 9 zwischen beiden Steuerungsprozessoreinheiten 5, 7 verwendet. Erst wenn der Auftrag beiden Steuerungsprozessoreinheiten 5, 7 zur Verfügung steht, wird der Auftrag ereignissynchron, d.h. zeitfolgerichtig bzgl. anderer Kommunikationsdienste, in die Bearbeitung synchronisiert. Diese Synchronisation garantiert eine identische Datenbasis auf beiden Steuerungsprozessoreinheiten 5, 7.

Die Ergebnisse der Bearbeitung der beiden Steuerungsprozessoreinheiten 5, 7 werden (hochsynchron) an den Schnittstellen (APIs) in Richtung der ersten und dritten Kommunikationsprozessoreinheiten 4, 6 zur Verfügung gestellt. Da in diesen bereitgestellten Informationen der ursprüngliche Auftraggeber, d.h. die erste Kommunikationsprozessoreinheit 4 enthalten ist, wird nur die entsprechende erste Kommunikationsprozessoreinheit 4 über das Ergebnis informiert, das Ereignis im anderen API (hier die dritte Kommunikationsprozessoreinheit 6) wird verworfen.

Die kommunikationstechnische Weiterverarbeitung erfolgt somit nur in der ersten Kommunikationsprozessoreinheit 4, die die Quittung über die entsprechende Standard-Verbindung an das System zum Bedienen und Beobachten (Operator Station) 11 zurücksendet.

Ein wichtiger Vorteil der vorliegenden Erfindung ist, dass lesende Zugriffe ohne eine hochsynchrone Kopplung auf den beiden Steuerungsprozessoreinheiten 4, 6 erfolgen können. Da lesende Zugriffe einen hohen Anteil der Kommunikationsdienste darstellen (typischerweise etwa 90%), kann bei einer entsprechenden Lastaufteilung seitens des Systems zum Bedienen und Beobachten (Operator Station) 11 über die Standard-Verbindungen eine deutliche Performance-Steigerung erreicht werden. Mit anderen Worten kann bei der vorliegenden Erfindung im Rahmen eines Lesevorgangs durch das System zum Bedienen und Beobachten (Operator Station) 11 nur eine der beiden Hardwareeinheiten 2, 3 angesprochen werden, da die beiden Kommunikationsprozessoreinheiten 4, 6 nicht hochsynchron (zeitversetzt) abgeglichen werden. Es genügt dem System zum Bedienen und Beobachten (Operator Station) 11, eine der beiden Kommunikationsprozessoreinheiten 4, 6 für einen Lesevorgang anzusprechen. Dies stellt einen gewichtigen Vorteil gegenüber bekannten redundanten Automatisierungssystemen dar.

Für den Fall, dass das System zum Bedienen und Beobachten (Operator Station) 11 Daten lesen möchte, die sich nur auf den beiden Kommunikationsprozessoreinheiten 4, 6 befinden, z.B. Daten der Systemdiagnose, kann der entsprechende Auftrag des Systems zum Bedienen und Beobachten (Operator Station) 11 ohne einen Datenabgleich bearbeitet und von der jeweiligen Kommunikationsprozessoreinheit 4, 6 dem System zum Bedienen und Beobachten (Operator Station) 11 quittiert werden.

Das System zum Bedienen und Beobachten (Operator Station) 11 kann auch Daten schreiben, die auf beiden Kommunikationsprozessoreinheiten 4, 6 hinterlegt werden sollen. Die erste Kommunikationsprozessoreinheit 4 sendet hierzu den empfangenen Auftrag über die nicht hochsynchrone (zeitversetzte) Kopplung 8 an die dritte Kommunikationsprozessoreinheit 6. Anschließend wird auf beiden Kommunikationsprozessoreinheiten 4, 6 das Datum geschrieben. Die Quittung der dritten Kommunikationsprozessoreinheit 6 wird über die nicht hochsynchrone (zeitversetzte) Kopplung 8 zur ersten Kommunikationsprozessoreinheit 4 weitergeleitet und dort verworfen.

Die weitergeleiteten Kommunikationsaufträge können hierbei geeignete Verbindungskennungen erhalten, um die Quittung der entsprechenden Kommunikationsprozessoreinheit 4, 6 zuführen zu können. Die Datenstrukturen sind dabei so angelegt, dass sie auf beiden Kommunikationsprozessoreinheiten 4, 6 identisch sind.

Ereignisse auf einer Kommunikationsprozessoreinheit 4, 6 treten immer einseitig auf. Hierbei handelt es sich i.a. um Ereignisse der Systemdiagnose, weil z.B. ein Drahtbruch in einer Peripheriebaugruppe erkannt und gemeldet wurde. Dieses einseitige Ereignis auf einer Kommunikationsprozessoreinheit 4, 6 wird über die nicht hochsynchrone (zeitversetzte) Kopplung 8 der anderen Kommunikationsprozessoreinheit 4, 6 mitgeteilt. Auf diese Weise kann das einseitige Ereignis von beiden Kommunikationsprozessoreinheiten 4, 6 zeitnah und jeweils lokal verarbeitet werden. Das duplizierte Ereignis kann der Systemdiagnose als Alarm über alle Standard-Verbindungen dem angeschlossenen System zum Bedienen und Beobachten (Operator Station) 11 mitgeteilt werden.

Wenn der Betriebszustand von RUN_REDUNDANT zu RUN_SOLO wechselt, werden die Standard-Verbindungen, die z.B. an der zweiten Hardwareeinheit 3 enden, abgebrochen, da die dritte Steuerungsprozessoreinheit 6 in den Betriebszustand STOP wechselt. Dies verhindert, dass das System zum Bedienen und Beobachten (Operator Station) 11 Daten bearbeitet, die nicht mehr mit dem Prozess der Anlage übereinstimmen. Die Standard-Verbindungen können anschließend wieder aufgebaut und genutzt werden. Der Verbindungsabbruch kann beispielsweise auf die Standard-Verbindungen mit der Kennung "M&C" begrenzt werden. Das System zum Bedienen und Beobachten (Operator Station) 11 baut diese Verbindungen wieder zur dritten Kommunikationsprozessoreinheit 6 auf. Die Kommunikationsdienste werden über die nicht hochsynchrone (zeitversetzte) Kopplung 8 zur ersten Kommunikationsprozessoreinheit 4 zur Bearbeitung weitergeleitet, solange sich die vierte Steuerungsprozessoreinheit 7 im Betriebszustand STOP befindet. Die anderen Standard-Verbindungen, die die Kennung "M&C" nicht haben, könnten weiterlaufen (z.B. "Engineering"-Verbindungen).

Die Kommunikationsprozessoreinheiten 4, 6 und die Steuerungsprozessoreinheiten 5, 7 können (jeweils paarweise) in einer einzigen Baugruppe vereint sein, beispielsweise einem Industrie PC mit einem Echtzeit Betriebssystem. Es ist aber auch möglich, dass der ersten (realen) Kommunikationsprozessoreinheit 4 eine zweite Steuerungsprozessoreinheit 5, und die vierte Steuerungsprozessoreinheit 7 einer virtuellen dritten Kommunikationsprozessoreinheit 6, die auf einem Hochleistungsserver als virtuelle Maschine läuft, zugeordnet ist. Allgemein können auf einem Hochleistungsrechner mehrere virtuelle Kommunikationsprozessoreinheiten 4, 6 instanziiert sein, die mehreren realen Steuerungsprozessoreinheiten 5, 7 zugeordnet sind. Die realen Steuerungsprozessoreinheiten 5, 7 garantieren dabei eine hohe Verfügbarkeit der Bearbeitung des Anwenderprogramms gegenüber dem Prozess der Anlage.

## Patentansprüche

1. Redundantes Automatisierungssystem (1), das zumindest eine erste Hardwareeinheit (2) und eine zweite Hardwareeinheit (3) umfasst, wobei die erste Hardwareeinheit (2) eine erste Prozessoreinheit (4) und eine zweite Prozessoreinheit (5), und die zweite Hardwareeinheit (3) eine dritte Prozessoreinheit (6) und eine vierte Prozessoreinheit (7) umfassen, wobei die erste Hardwareeinheit (2) dazu ausgebildet ist, mittels der ersten Prozessoreinheit (4) eine erste Gruppe von Aufgaben und mittels der zweiten Prozessoreinheit (5) eine zweite Gruppe von Aufgaben auszuführen und entsprechende Ausgangssignale an einen durch das redundante Automatisierungssystem (1) gesteuerten industriellen Prozess (10a, 10b, 10c, 10d) auszugeben,
wobei die zweite Hardwareeinheit (3) dazu ausgebildet ist, mittels der dritten Prozessoreinheit (6) eine dritte Gruppe von Aufgaben und mittels der vierten Prozessoreinheit (7) eine vierte Gruppe von Aufgaben auszuführen und entsprechende Ausgangssignale an einen durch das redundante Automatisierungssystem (1) gesteuerten industriellen Prozess (10a, 10b, 10c, 10d) auszugeben,
wobei das redundante Automatisierungssystem (1) dazu ausgebildet ist, bei einem Ausfall der ersten Hardwareeinheit (2) die Aufgaben der dritten Gruppe und der vierten Gruppe durchzuführen und die entsprechenden Ausgangssignale an einen durch das redundante Automatisierungssystem (1) gesteuerten industriellen Prozess (10a, 10b, 10c, 10d) auszugeben,
und wobei das redundante Automatisierungssystem (1) dazu ausgebildet ist, bei einem Ausfall der zweiten Hardwareeinheit (3) die Aufgaben der ersten und der zweiten Gruppe durchzuführen und die entsprechenden Ausgangssignale an den gesteuerten industriellen Prozess (10a, 10b, 10c, 10d) auszugeben, wobei das redundante Automatisierungssystem (1) eine erste Synchronisationsverbindung (8) umfasst, über die die Aufgaben der ersten Gruppe und der dritten Gruppe miteinander abgleichbar sind, und eine zweite Synchronisationsverbindung (9) umfasst, über die die Aufgaben der zweiten Gruppe und der vierten Gruppe miteinander abgleichbar sind,
**dadurch gekennzeichnet, dass**
die erste Synchronisationsverbindung (8) für einen zeitversetzten Abgleich der Aufgaben der ersten Gruppe und der dritten Gruppe ausgebildet ist, wobei der zeitversetzte Abgleich der Aufgaben der ersten Gruppe und der dritten Gruppe über die erste Synchronisationsverbindung (8) eine zeitliche Verzögerung von mehr als 10 Millisekunde aufweist,
und dadurch, dass die zweite Synchronisationsverbindung (9) für einen hochsynchronen Abgleich der Aufgaben der zweiten Gruppe und der vierten Gruppe ausgebildet ist, wobei der hochsynchrone Abgleich der Aufgaben der zweiten Gruppe und der vierten Gruppe über die zweite Synchronisationsverbindung (9) eine zeitliche Verzögerung von weniger als 1 Millisekunde aufweist.

2. Redundantes Automatisierungssystem (1) nach Anspruch 1, bei dem der hochsynchrone Abgleich durch das Anfallen einer neuen Aufgabe der zweiten oder der vierten Gruppe initiiert wird.

3. Redundantes Automatisierungssystem (1) nach einem der vorangegangenen Ansprüche, bei dem die erste Synchronisationsverbindung (8) und die zweite Synchronisationsverbindung (9) ein gemeinsames Synchronisationsmedium (15) nutzen.

4. Redundantes Automatisierungssystem (1) nach Anspruch 3, bei dem das gemeinsame Synchronisationsmedium (15) ein Lichtwellenleiter ist.

5. Redundantes Automatisierungssystem (1) nach einem der vorangegangenen Ansprüche, bei dem die erste Gruppe von Aufgaben und die dritte Gruppe von Aufgaben im Wesentlichen Kommunikationsaufgaben sind, die keine Ausgangssignale an den gesteuerten industriellen Prozess (10a, 10b, 10c, 10d) als Ergebnis aufweisen.

6. System (14), welches ein System (11) zum Bedienen und Beobachten des industriellen Prozesses (10a, 10b, 10c, 10d) und ein redundantes Automatisierungssystem (1) nach einem der vorangegangenen Ansprüche umfasst, wobei das System (11) zum Bedienen und Beobachten des industriellen Prozesses (10a, 10b, 10c, 10d) über einen Anlagenbus (12), der insbesondere als Industrial Ethernet ausgebildet ist, mit der ersten Prozessoreinheit (4) der ersten Hardwareeinheit (2) verbunden ist, und wobei das System (11) zum Bedienen und Beobachten des industriellen Prozesses (10a, 10b, 10c, 10d) über den Anlagenbus (12) mit der dritten Prozessoreinheit (6) der zweiten Hardwareeinheit (3) verbunden ist, und wobei die zweite Prozessoreinheit (5) der ersten Hardwareeinheit (2) und die vierte Prozessoreinheit (7) der zweiten Hardwareeinheit (3) mit dem industriellen Prozess (10a, 10b, 10c, 10d) verbindbar sind, insbesondere über einen als Industrial Ethernet ausgebildeten Feldbus (13).

7. System (14) nach Anspruch 6, bei dem das System (11) zum Bedienen und Beobachten des industriellen Prozesses (10a, 10b, 10c, 10d) mit der ersten Prozessoreinheit (4) und der dritten Prozessoreinheit (6) des redundanten Automatisierungssystems (1) mittels einer auf TCP/IP oder TLS basierenden Kommunikationsverbindung kommunikativ verbunden sind.

8. Verfahren zum Betreiben eines redundant ausgelegten Automatisierungssystems (1), das zumindest eine erste Hardwareeinheit (2) und eine zweite Hardwareeinheit (3) umfasst, wobei die erste Hardwareeinheit (2) eine erste Prozessoreinheit (4) und eine zweite Prozessoreinheit (5), und die zweite Hardwareeinheit (3) eine dritte Prozessoreinheit (6) und eine vierte Prozessoreinheit (7) umfassen,
wobei die erste Hardwareeinheit (2) dazu ausgebildet ist, mittels der ersten Prozessoreinheit (4) eine erste Gruppe von Aufgaben und mittels der zweiten Prozessoreinheit (5) eine zweite Gruppe von Aufgaben auszuführen,
wobei die zweite Hardwareeinheit (3) dazu ausgebildet ist, mittels der dritten Prozessoreinheit (6) eine dritte Gruppe von Aufgaben und mittels der vierten Prozessoreinheit (7) eine vierte Gruppe von Aufgaben auszuführen,
wobei das redundante Automatisierungssystem (1) dazu ausgebildet ist, bei einem Ausfall der ersten Hardwareeinheit (2) die Aufgaben der dritten Gruppe und der vierten Gruppe durchzuführen und entsprechende Ausgangssignale an einen durch das redundante Automatisierungssystem (1) gesteuerten industriellen Prozess (10a, 10b, 10c, 10d) auszugeben,
und wobei das redundante Automatisierungssystem (1) dazu ausgebildet ist, bei einem Ausfall der zweiten Hardwareeinheit (3) die Aufgaben der ersten und der zweiten Gruppe durchzuführen und entsprechende Ausgangssignale an den gesteuerten industriellen Prozess (10a, 10b, 10c, 10d) auszugeben,
wobei das redundante Automatisierungssystem (1) eine erste Synchronisationsverbindung (8) umfasst, über die die Aufgaben der ersten Gruppe und der dritten Gruppe miteinander abgleichbar sind, und eine zweite Synchronisationsverbindung (9) umfasst, über die die Aufgaben der zweiten Gruppe und der vierten Gruppe miteinander abgleichbar sind,
**dadurch gekennzeichnet, dass**
über die erste Synchronisationsverbindung (8) ein zeitversetzter Abgleich der Aufgaben der ersten Gruppe und der dritten Gruppe erfolgt, wobei der zeitversetzte Abgleich der Aufgaben der ersten Gruppe und der dritten Gruppe über die erste Synchronisationsverbindung (8) eine zeitliche Verzögerung von mehr als 10 Millisekunde aufweist,
und dadurch, dass über die zweite Synchronisationsverbindung (9) ein hochsynchroner Abgleich der Aufgaben der zweiten Gruppe und der vierten Gruppe erfolgt, wobei der hochsynchrone Abgleich der Aufgaben der zweiten Gruppe und der vierten Gruppe über die zweite Synchronisationsverbindung (9) eine zeitliche Verzögerung von weniger als 1 Millisekunde aufweist.

9. Verfahren nach Anspruch 8, bei dem der hochsynchrone Abgleich durch das Anfallen einer neuen Aufgabe der zweiten oder der vierten Gruppe initiiert wird.

10. Verfahren nach Anspruch 8 oder 9, bei dem die erste Synchronisationsverbindung (8) und die zweite Synchronisationsverbindung (9) ein gemeinsames Synchronisationsmedium (15) nutzen, insbesondere einen Lichtwellenleiter.

11. Verfahren nach einem der Ansprüche 8 bis 10, bei dem die erste Gruppe von Aufgaben und die dritte Gruppe von Aufgaben im Wesentlichen Kommunikationsaufgaben sind, die keine Ausgangssignale an den gesteuerten industriellen Prozess (10a, 10b, 10c, 10d) als Ergebnis aufweisen.

## Claims

1. Redundant automation system (1) which comprises at least one first hardware unit (2) and one second hardware unit (3), wherein the first hardware unit (2) comprises a first processor unit (4) and a second processor unit (5), and the second hardware unit (3) comprises a third processor unit (6) and a fourth processor unit (7),
wherein the first hardware unit (2) is designed to execute a first group of tasks by means of the first processor unit (4) and to execute a second group of tasks by means of the second processor unit (5) and to output corresponding output signals to an industrial process (10a, 10b, 10c, 10d) controlled by the redundant automation system (1),
wherein the second hardware unit (3) is designed to execute a third group of tasks by means of the third processor unit (6) and to execute a fourth group of tasks by means of the fourth processor unit (7) and to output corresponding output signals to an industrial process (10a, 10b, 10c, 10d) controlled by the redundant automation system (1),
wherein the redundant automation system (1) is designed, in the event of failure of the first hardware unit (2), to execute the tasks of the third group and the fourth group and to output the corresponding output signals to an industrial process (10a, 10b, 10c, 10d) controlled by the redundant automation system (1),
and wherein the redundant automation system (1) is designed, in the event of failure of the second hardware unit (3), to execute the tasks of the first and the second group and to output the corresponding output signals to the controlled industrial process (10a, 10b, 10c, 10d),
wherein the redundant automation system (1) comprises a first synchronisation connection (8) via which the tasks of the first group and the third group can be compared with one another, and comprises a second synchronisation connection (9) via which the tasks of the second group and the fourth group can be compared with one another,
**characterised in that**
the first synchronisation connection (8) is designed for a time-offset comparison of the tasks of the first group and the third group, wherein the time-offset comparison of the tasks of the first group and the third group via the first synchronisation connection (8) has a time lag of more than 10 milliseconds,
and **in that** the second synchronisation connection (9) is designed for a highly synchronous comparison of the tasks of the second group and the fourth group, wherein the highly synchronous comparison of the tasks of the second group and the fourth group via the second synchronisation connection (9) has a time lag of less than 1 millisecond.

2. Redundant automation system (1) according to claim 1, in which the highly synchronous comparison is initiated by the assignment of a new task to the second or the fourth group.

3. Redundant automation system (1) according to one of the preceding claims, in which the first synchronisation connection (8) and the second synchronisation connection (9) use a common synchronisation medium (15).

4. Redundant automation system (1) according to claim 3, in which the common synchronisation medium (15) is an optical waveguide.

5. Redundant automation system (1) according to one of the preceding claims, in which the first group of tasks and the third group of tasks are essentially communication tasks which do not have any output signals to the controlled industrial process (10a, 10b, 10c, 10d) as a result.

6. System (14) which comprises a system (11) for operating and monitoring the industrial process (10a, 10b, 10c, 10d) and a redundant automation system (1) according to one of the preceding claims, wherein the system (11) for operating and monitoring the industrial process (10a, 10b, 10c, 10d) is connected to the first processor unit (4) of the first hardware unit (2) via a system bus (12), which in particular is designed as Industrial Ethernet, and wherein the system (11) for operating and monitoring the industrial process (10a, 10b, 10c, 10d) is connected via the system bus (12) to the third processor unit (6) of the second hardware unit (3), and wherein the second processor unit (5) of the first hardware unit (2) and the fourth processor unit (7) of the second hardware unit (3) can be connected to the industrial process (10a, 10b, 10c, 10d), in particular via a fieldbus (13) designed as Industrial Ethernet.

7. System (14) according to claim 6, in which the system (11) for operating and monitoring the industrial process (10a, 10b, 10c, 10d) is communicatively connected to the first processor unit (4) and the third processor unit (6) of the redundant automation system (1) by means of a communication connection based on TCP/IP or TLS.

8. Method for operating a redundant automation system (1) which comprises at least one first hardware unit (2) and one second hardware unit (3), wherein the first hardware unit (2) comprises a first processor unit (4) and a second processor unit (5), and the second hardware unit (3) comprises a third processor unit (6) and a fourth processor unit (7),
wherein the first hardware unit (2) is designed to execute a first group of tasks by means of the first processor unit (4) and to execute a second group of tasks by means of the second processor unit (5),
wherein the second hardware unit (3) is designed to execute a third group of tasks by means of the third processor unit (6) and to execute a fourth group of tasks by means of the fourth processor unit (7),
wherein the redundant automation system (1) is designed, in the event of failure of the first hardware unit (2), to execute the tasks of the third group and the fourth group and to output corresponding output signals to an industrial process (10a, 10b, 10c, 10d) controlled by the redundant automation system (1),
and wherein the redundant automation system (1) is designed, in the event of failure of the second hardware unit (3), to execute the tasks of the first and the second group and to output corresponding output signals to the controlled industrial process (10a, 10b, 10c, 10d),
wherein the redundant automation system (1) comprises a first synchronisation connection (8) via which the tasks of the first group and the third group can be compared with one another, and comprises a second synchronisation connection (9) via which the tasks of the second group and the fourth group can be compared with one another,
**characterised in that**
a time-offset comparison of the tasks of the first group and the third group takes place via the first synchronisation connection (8), wherein the time-offset comparison of the tasks of the first group and the third group via the first synchronisation connection (8) has a time lag of more than 10 milliseconds,
and **in that** a highly synchronous comparison of the tasks of the second group and the fourth group takes place via the second synchronisation connection (9), wherein the highly synchronous comparison of the tasks of the second group and the fourth group via the second synchronisation connection (9) has a time lag of less than 1 millisecond.

9. Method according to claim 8, in which the highly synchronous comparison is initiated by the assignment of a new task to the second or the fourth group.

10. Method according to claim 8 or 9, in which the first synchronisation connection (8) and the second synchronisation connection (9) use a common synchronisation medium (15), in particular an optical waveguide.

11. Method according to one of claims 8 to 10, in which the first group of tasks and the third group of tasks are essentially communication tasks which do not have any output signals to the controlled industrial process (10a, 10b, 10c, 10d) as a result.

## Revendications

1. Système (1) redondant d'automatisation, qui comprend au moins une première unité (2) en matériel et une deuxième unité (3) en matériel, dans lequel la première unité (2) en matériel comprend une première unité (4) de processeur et une deuxième unité (5) de processeur, et la deuxième unité (3) en matériel comprend une troisième unité (6) de processeur et une quatrième unité (7) de processeur, dans lequel la première unité (2) en matériel est constituée pour, au moyen de la première unité (4) de processeur, exécuter un premier groupe de tâches et, au moyen de la deuxième unité (5) de processeur, un deuxième groupe de tâches et donner des signaux correspondants de sortie à un processus (10a, 10b, 10c, 10d) industriel commandé par le système (1) redondant d'automatisation,
dans lequel la deuxième unité (3) en matériel est constituée pour, au moyen de la troisième unité (6) de processeur, exécuter un troisième groupe de tâches et, au moyen de la quatrième unité (7) de processeur, exécuter un quatrième groupe de tâches et donner des signaux correspondants de sortie à un processus (10a, 10b, 10c, 10d) industriel commandé par le système (1) redondant d'automatisation,
dans lequel le système (1) redondant d'automatisation est constitué pour, en cas de défaillance de la première unité (2) en matériel, exécuter les tâches du troisième groupe et du quatrième groupe et donner les signaux correspondants de sortie à un processus (10a, 10b, 10c, 10d) industriel commandé par le système (1) redondant d'automatisation,
et dans lequel le système (1) redondant d'automatisation est constitué pour, dans le cas d'une défaillance de la deuxième unité (3) en matériel, exécuter les tâches du premier et du deuxième groupe et donner les signaux correspondants de sortie au processus (10a, 10b, 10c, 10d) industriel commandé,
dans lequel le système (1) redondant d'automatisation comprend une première liaison (8) de synchronisation, par laquelle les tâches du premier groupe et du troisième groupe peuvent être équilibrées les unes avec les autres, et comprend une deuxième liaison (9) de synchronisation, par laquelle les tâches du deuxième groupe et du quatrième groupe peuvent être équilibrées les unes avec les autres,
**caractérisé en ce que**
la première liaison (8) de synchronisation est constituée pour un équilibrage décalé dans le temps des tâches du premier groupe et du troisième groupe, dans lequel l'équilibrage décalé dans le temps des tâches du premier groupe et du troisième groupe par la première liaison (8) de synchronisation a un retard dans le temps de plus de 10 millisecondes,
et **caractérisé en ce que** la deuxième liaison (9) de synchronisation est constituée pour un équilibrage très synchronisé des tâches du deuxième groupe et du quatrième groupe, dans lequel l'équilibrage très synchronisé des tâches du deuxième groupe et du quatrième groupe par la deuxième liaison (9) de synchronisation a un retard dans le temps de moins de 1 milliseconde.

2. Système (1) redondant d'automatisation suivant la revendication 1, dans lequel l'équilibrage très synchronisé est initié par l'apparition d'une nouvelle tâche du deuxième ou du quatrième groupe.

3. Système (1) redondant d'automatisation suivant l'une des revendications précédentes, dans lequel la première liaison (8) de synchronisation et la deuxième liaison (9) de synchronisation utilisent un support (15) commun de synchronisation.

4. Système (1) redondant d'automatisation suivant la revendication 3, dans lequel le support (15) commun de synchronisation est une fibre optique.

5. Système (1) redondant d'automatisation suivant l'une des revendications précédentes, dans lequel le premier groupe de tâches et le troisième groupe de tâches sont essentiellement des tâches de communication, qui n'ont pas comme résultat des signaux de sortie envoyés au processus (10a, 10b, 10c, 10d) industriel commandé.

6. Système (14), qui comprend un système (11) de commande et d'observation du processus (10a, 10b, 10c, 10d) industriel et un système (1) redondant d'automatisation suivant l'une des revendications précédentes, dans lequel le système (11) de commande et d'observation du processus (10a, 10b, 10c, 10d) industriel est, par un bus (12) d'installation, qui est constitué en particulier en ethernet industriel, relié à la première unité (4) de processeur de la première unité (2) en matériel, et dans lequel le système (11) de commande et d'observation du processus (10a, 10b, 10c, 10d) industriel est, par le bus (12) d'installation, relié à la troisième unité (6) de processeur de la deuxième unité (3) en matériel, et dans lequel la deuxième unité (5) de processeur de la première unité (2) en matériel et la quatrième unité (7) de processeur de la deuxième unité (3) en matériel sont reliées au processus (10a, 10b, 10c, 10d) industriel, en particulier par un bus (13) de champ constitué en ethernet industriel.

7. Système (14) suivant la revendication 6, dans lequel le système (11) de commande et d'observation du processus (10a, 10b, 10c, 10d) industriel est, au moyen d'une liaison de communication reposant sur TCP/IP ou TLS, relié en communication à la première unité (4) de processeur et à la troisième unité (6) de processeur du système (1) redondant d'automatisation.

8. Procédé pour faire fonctionner un système (1) d'automatisation conçu de manière redondante, qui comprend au moins une première unité (2) en matériel et une deuxième unité (3) en matériel, dans lequel la première unité (2) en matériel comprend une première unité (4) de processeur et une deuxième unité (5) de processeur, et la deuxième unité (3) en matériel comprend une troisième unité (6) en processeur et une quatrième unité (7) de processeur,
dans lequel la première unité (2) en matériel est constituée pour, au moyen de la première unité (4) de processeur, exécuter un premier groupe de tâches et, au moyen de la deuxième unité (5) de processeur, exécuter un deuxième groupe de tâches,
dans lequel la deuxième unité (3) en matériel est constituée pour, au moyen de la troisième unité (6) de processeur, exécuter un troisième groupe de tâches et, au moyen de la quatrième unité (7) de processeur, exécuter un quatrième groupe de tâches,
dans lequel le système (1) redondant d'automatisation est constitué pour, en cas de défaillance de la première unité (2) en matériel, exécuter les tâches du troisième groupe et du quatrième groupe et donner des signaux correspondants de sortie à un processus (10a, 10b, 10c, 10d) industriel commandé par le système (1) redondant d'automatisation,
et dans lequel le système (1) redondant d'automatisation est constitué pour, en cas de défaillance de la deuxième unité (3) en matériel, exécuter les tâches du premier et du deuxième groupe et donner des signaux correspondants de sortie au processus (10a, 10b, 10c, 10d) industriel commandé,
dans lequel le système (1) redondant d'automatisation comprend une première liaison (8) de synchronisation, par laquelle les tâches du premier groupe et du troisième groupe peuvent être équilibrées entre elles et une deuxième liaison (9) de synchronisation, par laquelle les tâches du deuxième groupe et du quatrième groupe peuvent être équilibrées entre elles,
**caractérisé en ce que**,
par la première liaison (8) de synchronisation, il s'effectue un équilibrage décalé dans le temps des tâches du premier groupe et du troisième groupe, dans lequel l'équilibrage décalé dans le temps des tâches du premier groupe et du troisième groupe, par la première liaison (8) de synchronisation, a un retard dans le temps de plus de 10 millisecondes,
et **caractérisé en ce que**, par la deuxième liaison (9) de synchronisation, il s'effectue un équilibrage très synchronisé des tâches du deuxième groupe et du quatrième groupe, dans lequel l'équilibrage très synchronisé des tâches du deuxième groupe et du quatrième groupe, par la deuxième liaison (9) de synchronisation, a un retard dans le temps de moins de 1 milliseconde.

9. Procédé suivant la revendication 8, dans lequel l'équilibrage très synchronisé est initié par l'apparition d'une tâche nouvelle du deuxième ou du quatrième groupe.

10. Procédé suivant la revendication 8 ou 9, dans lequel la première liaison (8) de synchronisation et la deuxième liaison (9) de synchronisation utilise un support (15) commun de synchronisation, en particulier une fibre optique.

11. Procédé suivant l'une des revendications 8 à 10, dans lequel le premier groupe de tâches et le troisième groupe de tâches sont essentiellement des tâches de communication, qui n'ont pas en résultat de signaux de sortie envoyés au processus (10a, 10b, 10c, 10d) industriel commandé.
